# EUROPÄISCHE PATENTANMELDUNG

(11) **EP 0 677 708 A2**
(43) Veröffentlichungstag der Anmeldung: **18.10.1995**
(21) Anmeldenummer: 95104368.6
(22) Anmeldetag: 24.03.1995
(51) Int. Cl.: F24D 19/10

(54) **Warmwasserheizung**

(30) Priorität: 12.04.1994 AT 745/94
(71) Anmelder: Landis & Gyr Technology Innovation AG, CH-6301 Zug (CH)
(72) Erfinder: Seebacher, Theodor Ernst, A-5421 Adnet (AT); Merz, Siegfried, CH-8911 Rifferswil (CH); Wild, Willi, CH-6319 Allenwinden (CH)

(57) **Zusammenfassung**

Es wird eine Warmwasserheizung mit mehreren zumindest in einem Strang (4) hydraulisch zusammengeschlossenen Heizkörpern (7) beschrieben, die je ein die Durchflußmenge durch den Heizkörper (7) steuerndes Ventil aufweisen. Um vorteilhafte Strömungsverhältnisse sicherzustellen, wird vorgeschlagen, daß die den Heizkörpern (7) zugeordneten Ventile als vorzugsweise mit einem Sollwertsteller ausgerüstete Differenzdruckregelventile (8) ausgebildet sind.

## Beschreibung

Die Erfindung bezieht sich auf eine Warmwasserheizung mit mehreren zumindest in einem Strang hydraulisch zusammengeschlossenen Heizkörpern, die je ein die Durchflußmenge durch den Heizkörper steuerndes Ventil aufweisen.

Bei Warmwasserheizungen dieser Art bedingt ein Absperren oder Drosseln eines Heizkörpers aufgrund der sich damit ändernden Strömungsverhältrnisse in dem diesen Heizkörper aufweisenden Strang eine Änderung des Heizwasserdurchflusses durch alle anderen Heizkörper dieses Strangs und nicht nur dieses Strangs, sondern auch aller übrigen an einen gemeinsam Vor- und RücKlauf für das Heizwasser angeschlossenen Stränge, wenn den einzelnen Strängen nicht Differerzdruckregler zugeordnet werden, die für eine Aufteilung des Heizwassers aufdie einzelnen Stränge in Abhängigkeit von den zu versorgenden Verbrauchern sorgen, und zwar über die jeweils vorgegebenen Sollwerte für die Differenzdruckregler. Nachteilig bei einem solchen aufeine wirtschaftliche Pumpenleistung Bedacht nehmenden hydraulischen Abgleich ist allerdings, daß die Sollwerteinstellungen der einzelnen Stränge voneinander abhängen, was bei mehreren Strängen zu einem aufwendigen Einstellverfahren mit wiederholten Nachstellungen führt. Trotzdem bleiben Änderungen der Strömungsverhältnisse in den einzelnen Strängen durch ein Absperren oder Drosseln von Heizkörpern unberücksichtigt.

Mit anderen Worten heißt das: Trotz des bei Heizungsanlagen dieser Art bei der Inbetriebnahme vorgenommenen hydraulischen Abgleichs wird bei herkömmlichen Heizungsanlagen mit mehreren Heizkörpern durch das Drosseln oder Schließen eines einzigen Heizkörpers der Durchfluß durch alle anderen Heizkörper erhöht. Werden mehrere Heizkörper gleichzeitig oder nacheinander gedrosselt oder geschlossen, so fällt die Erhöhung des Durchflusses entsprechend größer aus. Umgekehrt führt das Öffnen und/oder Aufdrehen einzelner Heizkörper zum Absinken des Durchflusses durch die übrigen Heizkörper.

Die von den Benutzern der Heinzanlage vorgenommenen bedarfsgerechten Manipulationen an einzelnen Heizkörpern führen also dazu, daß der mit großem Aufwand vorgenommene Abgleich der Heizungsanlage hinsichtlich der hydraulischen Widerstände wenigstens teilweise zunichte gemacht wird. Tendenziell führt das Drosseln einzelner Heizkörper dazu, daß die Temperatur in jenen Räumen, in denen nicht an den Heizkörpern manlpuliert wurde, steigt. Umgekehrt führt das Öffnen einzelner Heizkörper zu einem Temperaturabfall in den anderen Räumen. In ungünstigen Fällen kann es auch vorkommen, daß in Teilen der Heizungsanlage plötzlich Strömungsgeräusche auftreten.

Es ist zwar bekannt, den einzelnen Heizkörpern Thermostatventile zuzuordnen, die die voreinstellbare Durchflußmenge durch die Heizkörper in Abhängigkeit von der Raumtemperatur steuern, doch kann deren Regelbereich nur dann vorteilhaft genutzt werden, wenn mit einer vorgegebenen Nenndurchflußmenge gerechnet werden kann, die jedoch aufgrund der Abhängigkeit der Durchflußmengen von den Strömungsverhältnissen im Strang nicht gewährleistet werden kann. Abgesehen davon sprechen diese Thermostatventile erst aufeine entsprechende Änderung der Raumtemperatur an.

Der Erfindung liegt somit die Aufgabe zugrunde, diese Mängel zu vermeiden und eine Warmwasserheizung der eingangs geschilderten Art so zu verbessern, daß die einzelnen Heizkörper unabhängig vom Betrieb der anderen Heizkörper in einfacher Weise mit gleichbleibender Heizleistung betrieben werden können.

Die genannte Aufgabe wird erfindungsgemäß durch die Merkmale des Anspruchs 1 gelöst. Vorteilhafte Ausgestaltungen ergeben sich aus den abhängigen Ansprüchen.

Das der Erfindung zugrundeliegende Prinzip besteht danach darin, daß jedes einem Heizkörper zugeordnete Ventil so beschaffen ist, daß es den Durchfluß durch das Ventil und damit durch den Heizkörper vom über dem Ventil herrschenden Differenzdruck entkoppelt. Mit anderen Worten: Der Durchfluß durch das Ventil wird erfindungsgemäß vom Differenzdruck unabhängig gemacht.

Durch die Anwendung dieses Prinzips wird der insbesondere bei größeren Heizungsanlagen meist sehr aufwendige Prozeß des hydraulischen Abgleichs durch Einstellen von in jedem Strang der Heizungsanlage eingebauten Druckregelventilen unnötig, ja der Einbau solcher Druckregelventile für die einzelnen Stränge wird entbehrlich.

Da zufolge der den einzelnen Heizkörpern selbst zugeordneten Differenzdruckregelventile die durch jeden Heizkörper strömende Heizwassermenge gesondert gesteuert wird, können sich Änderungen der Strömungsverhältnisse in einem oder mehreren Strängen durch ein Absperren oder Drosseln einzelner Heizkörper nicht auf den eingestellten Heizwasserstrom durch die anderen Heizkörper auswirken, weil eben ein beispielsweise dadurch bedingter Anstieg des Differenzdrucks im Differendruckregelventil einen Regeleingriff und eine entsprechende Drosselung der Durchflußmenge nach sich zieht, bis der eingestellte Sollwert für den Differenzdruck und damit die gewünschte Durchflußmenge wieder erreicht ist. Über einen Sollwertsteller läßt sich z.B. der für die Nenndurchflußmenge eines Heizkörpers erforderliche Sollwert für den Differenzdruck einstellen, so daß die Warmwasserheizung in einfacher Weise an die Anforderungen der einzelnen Verbraucher angepaßt wird. Zum energiesparenden hydraulischen Abgleich ist daher lediglich die Pumpenleistung entsprechend abzustimmen.

Die Möglichkeit der Sollwertvorgabe erlaubt darüber hinaus auch eine vorteilhalte Thermostatregelung der einzelnen Heizkörper. Zu diesem Zweck braucht der Sollwertsteller der Differenzdruckregelventile lediglich in Abhängigkeit von der Raumtemperatur verstellbar zu sein, wofür sich bewährte Thermostateinrichtungen anbieten. Bei einer Zusammenfassung der hierfür erforderlichen, an sich bekannten Bauteile können die Differenzdruckregelventile mit oder ohne Thermostateinrichtung unmittelbar als Heizkörperventile eingesetzt werden.

In der Zeichnung ist der Erfindungsgegenstand beispielsweise dargestellt. Es zeigen:
- Fig. 1: eine erfindungemäße Warmwasserheizung in einem vereinfachten Blockschaltbild,
- Fig.2: einen Differenzdruckregler in einem schematischen Blockschaltbild und
- Fig. 3: ein weiteres Ausführungsbeispiel.

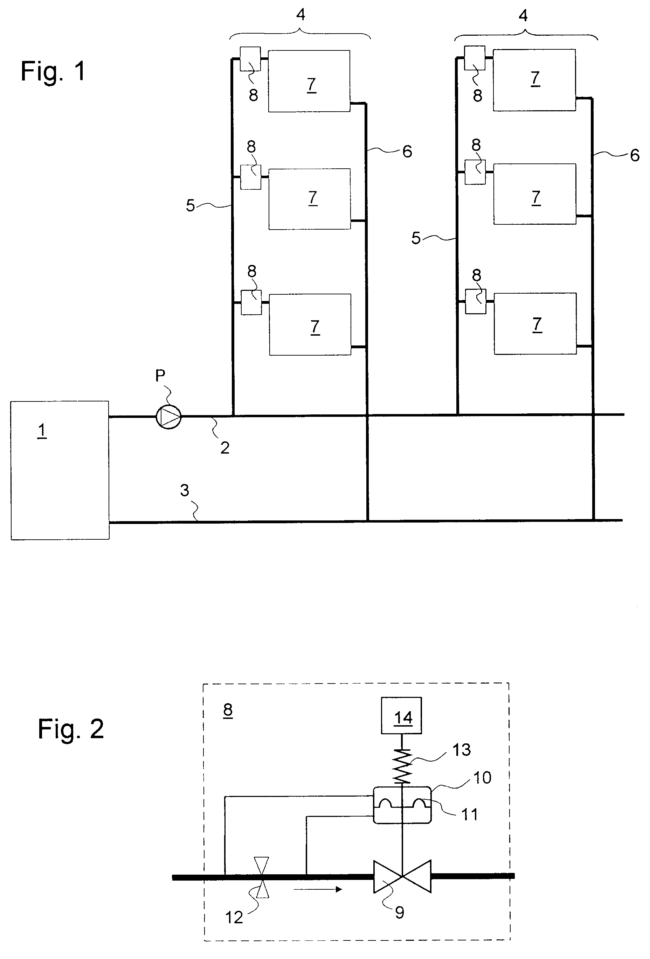

Die in der Fig. 1 dargestellte Warmwasserheizung weist einen beispielsweise an einen Heizungskessel 1 angeschlossenen Vorlauf 2 und einen Rücklauf 3 zur Heizwasserversorgung mehrerer Stränge 4 auf, die jeweils aus einer Vorlaufleitung 5, einer Rücklaufleitung 6 und aus zwischen den Vor- und Rücklaufleitungen 5 und 6 hydraulisch parallel geschalteten Heizkörpern 7 bestehen. Eine den Strängen 4 gemeinsame Umwälzpumpe ist mit P bezeichnet.

Im Unterschied zu herkömmlichen Warmwasserheizungen dieser Art sindjedoch nicht die einzelnen Stränge 4 mit Differenzdrückreglem versehen, sondern es wirdjedem Heizkörper 7 ein Differenzdruckregler 8 zugeordnet, dessen Wirkungsweise an Hand der Fig. 2 näher erläutert wird. Der Differenzdruckregler 8 enthält ein Stellglied 9, das mittels eines Antriebs 10 verstellbar ist. Der Antrieb 10 weist eine Membran 11 auf welche beidseitig mit je einem Druck beaufschlagt wird, nämlich mit dem Druck vor und nach einer vom Heizwasserstrom durch den jeweiligen Heizkörper 7 durchströmten Meßblende 12, so daß aufdie Membran 11 der an der Meßblende 12 abfallende Differenzdruck zur Verstellung des Regelventils 9 wirksam wird. Als Meßblende braucht dabei nicht ein gesondertes Bauteil eingesetzt zu werden, wenn im Strömungsweg des Regelventils eine entsprechende Drosselstelle als Meßblende vorgesehen wird, wie sie sich z.B. im Bereich des Ventilsitzes und -kegels ergibt. Das Blockschaltbild nach der Fig. 2 ist daher nur zur Erklärung der Wirkungsweise, nicht aber als Konstruktionvorschrift für das Differenzdruckregelventil zu werten.

Über die Vorspannung einer auf die Membran 11 wirkenden Feder 13 kann der jeweilige Sollwert für den zu regelnden Differenzdruck und damit beispielsweise für die Nenndurchflußmenge eingestellt werden. Dazu ist eine Verstellvorrichtung 14 vorhanden. Im einfachsten Fall ist diese Verstellvorrichtung 14 lediglich eine Einstellschraube. Mit deren Hilfe ist der Arbeitspunkt des Regelventils 9 einstellbar, so daß die Kombination von Feder 13 und Verstelleinrichtung 14 als Differenzdruck-Sollwertsteller bezeichnet werden kann. Auf diese Weise ist jeder Heizkörper 7, an dem ein Differenzdruckregler 8 montiert ist, aufeinfache Weise hydraulisch abgleichbar. Die Verstellvorrichtung 14 kann aber auch motorisch betrieben werden, wobei der Motor von einem zentralen Regler betätigbar ist. Die Verstellbarkeit kann dabei stetig oder stufig sein. Statt eines Motors ist auch ein an sich bekannter elektrothermischer Antrieb einsetzbar.

Die Verstellvorrichtung 14 kann alternativ oder zusätzlich eine übliche Thermostateinrichtung enthalten. Durch diese Thermostateinrichtung Bann die Vorspannung dieser Feder zusätzlich verstellt werden, so daß der Differenzdruckregler 8 in einem solchen Fall auch als Thermostatventil eingesetzt werden kann. Besonders einfache Einbaubedingungen ergeben sich in diesem Zusammenhang, wenn die Differenzdruckregler 8 als Heizkörperventile ausgebildet sind und unmittelbar in den zu- oder ablaufseitigen Schraubanschluß der Heizkörper eingesetzt werden können.

Aufgrund der Wirkungsweise der Differenzdruckregler 8 können einzelne Heizkörper 7 der Warmwasserheizung willkürlich herausgegriffen und abgesperrt oder gedrosselt werden, ohne daß sich der Massenstrom durch die übrigen Heizkörper 7 ändert, weil die eingestellte Durchflußmenge dieser Heizkörper 7 über die Differenzdruckregler 8 unabhängig von den jeweiligen Änderungen der Strömungsverhältnisse in den einzelnen Strängen 4 konstant gehalten wird.

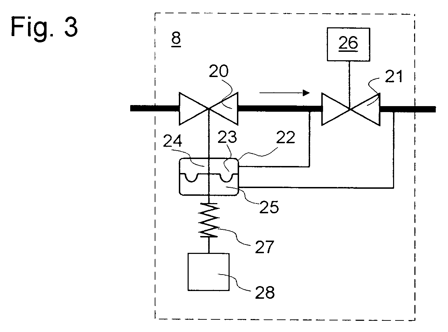

In der Fig. 3 ist ein Schema einer weiteren Ausführungsform der Erfindung gezeigt. Der Differenzdruckregler 8 besteht hierbei aus zwei hintereinandergeschalteten Drosselstellen, nämlich einem Regelglied 20, einem Verstellglied 21 und einem Regelantrieb 22. Der Regelantrieb 22 weist zwei durch eine Membran 23 getrennte Räume 24 und 25 auf, wobei diese beiden Räume 24, 25 mit dem Strömungsmedium vor und hinter dem Verstellglied 21 verbunden sind. In der Fig. 3 ist die Strömungsrichtung mittels eines Pfeils gekennzeichnet. Im ersten Raum 24 des Regelantriebs 22 wirkt somit der Druck des Strömungsmediums vor dem Verstellglied 21, im zweiten Raum 25 wirkt der Druck hinter dem Verstellglied 21. Folglich wirkt aufdie Membran 23 der Differenzdruck über dem Verstellglied 21. Die Membran 23 des Regelantriebs 22 betätigt das Regelglied 20 in der Weise, daß bei steigendem Differenzdruck über dem Verstellglied 21 das Regelglied 20 in Schließrichtung gesteuert wird., während es bei fallendem Differenzdruck in Öffnungsrichtung gesteuert wird. Damit wird ein schwankender Differenzdruck so ausgeregelt, daß am Verstellglied 21 immer ein konstanter Differenzdruck herrscht. Das Verstellglied 21 weist einen Antrieb 26 auf mit dem der Hub H des Verstellglieds 21 veränderbar ist. Die Vorrichtung nach Fig. 3 garantiert dabei, daß der Zusammenhang zwischen dem Hub H des Verstellglieds 21 und dem Volumenstrom, der durch das Verstellglied 21 fließt, vollkommen unabhängig ist vom Differenzdruck in der Warmwasserheizungsanlage. Damit ist es möglich, den Volumenstrom über den Hub H zu verstellen und zu regeln, ohne daß dabei der Differenzdruck als Störgröße wirkt.

Das Regelglied 20 ist vorteilhalterweise einstellbar. Um diese Einstellbarkeit zu erreichen, ist eine Feder 27 vorhanden, die in bekannter Weise aufdie Membran 23 wirkt. Die Vorspannung der Feder 27, die die Charakteristik des Regelglieds 20 bestimmt, ist einstellbar mit Hilfe einer Verstellvorrichtung 28. Im einfachsten Fall ist diese Verstellvorrichtung 28 lediglich eine Einstellschraube. Mit deren Hilfe ist der Arbeitspunkt des Regelglieds 20 einstellbar. Auf diese Weise ist jeder Heizkörper 7, an dem ein Differenzdruckregler 8 montiert ist, aufeinfache Weise hydraulisch abgleichbar. Bei diesem Ausführungsbeispiel bilden die Feder 27 und die Verstelleinrichtung 28 den Differenzdruck-Sollwertsteller.

Der Hub H₂₀, den der Regelantrieb 22 aufdas Regelglied 20 ausübt, kann als Maß dafür betrachtet werden, welcher Teil des gesamten Differenzdrucks im Differenzdruckregler 8 vernichtet wird. Im Sinne einer ökonomischen Betriebsführung sollte dieser vernichtete Differenzdruck so klein wie möglich sein, dem es wäre unökonomisch, zunächst durch eine Umwälzpumpe P einen hohen Differenzdruck zu erzeugen und einen größeren Teil davon anschließend in den Differenzdruckreglern 8 wieder zu vernichten. Der von der Umwälzpumpe P notwendigerweise zu erzeugende Differenzdruck muß aber so hoch sein, daß in der Heizungsanlage ein genügender Durchfluß durch alle Heizkörper 7 erzielbar ist. Es ist jedoch vorteilhaft, den vorerwähnten Hub H₂₀ meßtechnisch zu erfassen und zum Zwecke der Steuerung der Umwälzpumpe P auszuwerten.

Der Antrieb 26 dient der Einstellung des Volumenstroms, der wie erwähnt vom herrschenden Differenzdruck nicht beeinflußt wird. Zum Zwecke der Regelung einer Heizungsanlage wird deshalb der Antrieb 26 von einem zentralen Heizungsregler her angesteuert. Der Antrieb 26 bewirkt am Verstellglied 21 einen bestimmten Hub H₂₁. Dieser Hub H₂₁ bestimmt den Durchfluß durch das Verstellglied 21 und damit durch den Heizkörper 7.

Es sei noch erwähnt, daß im Rahmen der Erfindung kann im Antrieb 26 auch eine Thermostateinrichtung enthalten sein kann, durch die der Volumenstrom der jeweiligen Temperaturabweichung entsprechend variiert wird.

Da der Hub H₂₁ mit dem Durchflußstrom störgrößenfrei korreliert, ist es besonders vorteilhaft möglich, das Stellsignal für den Hub H₂₁ direkt als Teilgröße zur Wärmemengenerfassung zu verwenden. Damit ist eine Wärmemengenerfassung für den einzelnen Heizkörper möglich, ohne daß es eines Volumenstrom-Erfassungsgerätes bedarf. Für die Wärmemengenerfassung zum Zwecke der Heizkostenverteilung ist also neben den Elementen zur Erfassung der Temperaturdaten, beispielsweise Fühler zur Erfassung von Vorlauf- und Rücklauftemperatur, kein besonderes Element zur Volumenstromerfassung nötig.

In diesem Zusammenhang kann es vorteilhaft sein, eine an sich bekannte Druckentlastung für den Ventilkegel des Regelventils 9 (Fig. 2) bzw. des Regelglieds 20 (Fig. 3) vorzusehen, um die strömungstechnische Rückwirkung zu reduzieren bzw. auszugleichen.

Wegen der durch die Erfindung bewirkten Entkopplung zwischen Differenzdruck und Volumenstrom ist es auch möglich, statt eines stetig wirkenden Antriebs 26, durch den das Verstellglied 21 in die Stellungen "Zu", "Voll offen" und alle möglichen Zwischenstellungen steuerbar ist, wodurch der Volumenstrom stufenlos verstellbar ist, einen bistabilen Antrieb zu verwenden, der das Verstellglied 21 nur in die beiden Endstellungen "Zu" und "Auf" steuert. Bei herkömmlichen AUF-ZU-Steuerungen sind die Rückwirkungen aufandere Heizkörper im allgemeinen größer als bei stetig verstellbaren Ventilen. Die Erfindung ermöglicht es, solche AUF-ZU-Steuerungen ohne Nachteile anzuwenden.

Die Erfindung ist selbstverständlich nicht auf die dargestellten Ausführungsbeispiele beschränkt, die nur die grundsätzlichen Verhältnisse veranschaulichen sollen. So ist es beispielsweise ohne weiteres möglich, die Differenzdruckregler 8 nicht wie dargestellt aufder Zulaufseite, sondern auf der Ablaufseite der Heizkörper 7 vorzusehen. Außerdem kann statt der dargestellten Parallelschaltung der Heizkörper 7 zwischen den Vor- und Rücklaufleitungen 5, 6 eine Einrohrausführung mit hydraulisch in Reihe geschalteten Heizkörpern 7 treten. Schließlich ist festzuhalten, daß die konstruktive Ausgestaltung der Differenzdruckregelventile 8 vielfältig sein kann, weil es vor allem auf die Steuerung des Massenstroms durch die einzelnen Heizkörper 7 ankommt. Auch können die Differenzdruckregler 8 statt der hydraulisch wirkenden Antriebe 10 bzw. 22 elektronische Regler und Antriebe enthalten, wenn gleichzeitig elektronische Meßwertaufnehmer zur Erfassung der entsprechenden Teildrücke eingesetzt werden.

## Patentansprüche

1. Warmwasserheizung mit mehreren zumindest in einem Strang (4) hydraulisch zusammengeschlossenen Heizkörpern (7), die je ein die Durchflußmenge durch den Heizkörper (7) steuerndes Ventil (8) aufweisen, dadurch gekennzeichnet, daß die den Heizkörpern (7) zugeordneten Ventile als vorzugsweise mit einem Differenzdruck-Sollwertsteller (13, 14; 27, 28) ausgerüstete Differenzdruckregler (8) ausgebildet sind.

2. Warmwasserheizung nach Anspruch 1, dadurch gekennzeichnet, daß der Differenzdruck-Sollwertsteller (13, 14; 27, 28) der Differenzdruckregler (8) in Abhängigkeit von der Raumtemperatur, beispielsweise über eine an sich bekannte Thermostateinrichtung, verstellbar ist.

3. Warmwasserheizung nach Anspruch 1, dadurch gekennzeichnet, daß der Differenzdruckregler (8) aus zwei hintereinandergeschalteten Drosselstellen besteht, nämlich einem Regelglied (20) und einem Verstellglied (21), wobei das Regelglied (20) von einem Regelantrieb (22) betätigbar ist, der zwei durch eine Membran (23) getrennte Räume 24 und 25 aufweist, wobei diese beiden Räume (24, 25) mit dem Strömungsmedium vor und hinter dem Verstellglied (21) verbunden sind, und daß der Regelantrieb (22) durch einen Sollwertsteller einstellbar ist, der eine aufeine Feder (27) wirkende Einstellvorrichtung (28) umfaßt.

4. Warmwasserheizung nach Anspruch 3, dadurch gekennzeichnet, daß das Verstellglied (21) einen der Regelung des Volumenstroms durch den Differenzdruckregler (8) dienenden Antrieb (26) aufweist, der von einem zentralen Heizungsregler ansteuerbar ist.

5. Warmwasserheizung nach Anspruch 4, dadurch gekennzeichnet, daß im Antrieb (26) eine an sich bekannte Thermostateinrichtung enthalten ist, die den Volumenstrom durch das Verstellglied (21) nach Maßgabe einer Temperaturabweichung variiert.
